## Europäisches Patentamt

## European Patent Office

## Office européen des brevets

(11) Veröffentlichungsnummer: **0 033 482**
**A1**

# (12) EUROPÄISCHE PATENTANMELDUNG

(21) Anmeldenummer: **81100447.2**

(22) Anmeldetag: **22.01.81**

(51) Int. Cl.³: **B 01 D 33/10**
**B 01 D 33/38**

(30) Priorität: **23.01.80 DE 8001666 U**

(43) Veröffentlichungstag der Anmeldung:
**12.08.81 Patentblatt 81/32**

(84) Benannte Vertragsstaaten:
**AT BE CH DE FR GB IT LI NL**

(71) Anmelder: **Passavant-Werke AG & Co. KG**

**D-6209 Aarbergen 7(DE)**

(84) Benannte Vertragsstaaten:
**BE CH DE FR IT LI NL AT**

(71) Anmelder: **U. Passavant AG Michelbacher Hütte**

**D-6209 Aarbergen 7(DE)**

(84) Benannte Vertragsstaaten:
**GB**

(72) Erfinder: **Karwatzki, Axel**
**Am Gieselberg 15**
**D-4172 Straelen 1(DE)**

(72) Erfinder: **Seel, Karl**
**Aarstrasse 11**
**D-6209 Aarbergen 3(DE)**

(74) Vertreter: **Glawe, Richard, Dr. Patentanwälte Dr. Richard Glawe et al,**
**Dr. Walter Moll, Dipl.-Ing. Klaus Delfs Dr. Ulrich Mengdehl Dr. Heinrich Niebuhr Postfach 260 162**
**D-8000 München 26(DE)**

(54) **Einrichtung zum Abtrennen von festen Verunreinigungen aus Flüssigkeiten.**

(57) Die Einrichtung weist eine horizontalachsige rotierende Siebtrommel (6) auf, von deren Außenseite das Siebgut abgeschält und in ein Auffanggefäß (29) gesammelt wird.

Um zu erreichen, daß die Einrichtung universell und auch für die Abtrennung von geruchsintensiven, gesundheitsschädlichen oder explosiven Stoffen eingesetzt werden kann, sind die Siebtrommel (6), sowie die Einlauf- (11) und Auffangeinrichtungen (29) in einem transportablen, geruch- und gasdicht verschließbaren Gehäuse (1), vorzugsweise vom Format eines Großmüllcontainers untergebracht, das gegebenenfalls durch eine dicht verschließbare Tür (2) begehbar ist. Außerdem kann eine Speichereinrichtung (15) für die gereinigte Flüssigkeit vorgesehen sein und der Abtrennvorgang durch die Füllstände in Einlaufeinrichtung (29) und/oder Flüssigkeitsspeicher (15) gesteuert werden.

Fig.1

Einrichtung zum Abtrennen von festen
Verunreinigungen aus Flüssigkeiten
------------------------------------------------

Die Erfindung betrifft eine Einrichtung zum Abtrennen
von festen Verunreinigungen aus Flüssigkeiten.

Zur Vorreinigung von Abwasser, das ausschließlich
einer Wiederverwendung als Brauchwasser oder einer
weitergehenden Reinigung zugeführt werden soll, werden um horizontale Achsen rotierende Siebtrommeln eingesetzt. Diese z. B. aus der DE-OS 25 01 547 bekannte
Siebtrommel ist selbstreinigend, weil das von außen
seitlich oben zugeführte Abwasser nach dem Eintritt in
das Trommelinnere im freien Fall unten wieder aus der
Trommel austritt und dabei beim Abstreifen des Siebgutes nicht erfaßte Schmutzpartikel fortschwemmt. Diese Siebtrommeln haben sich im Dauereinsatz bestens bewährt; sie sind wenig wartungsintensiv und sehr verschleißarm.

Es gibt Anwendungsfälle, in denen Abwässer der genannten Art an wechselnden Orten und/oder in wechselnder
Menge anfallen. Auch stark geruchsintensive Abwässer
bzw. Abwässer, die mit solchen Stoffen verunreinigt
sind oder gesundheitsschädliche oder explosive Flüssigkeiten, müssen in vermehrtem Umfang verarbeitet
werden. Es bestand daher der Wunsch, eine für diese
Zwecke universal einsetzbare Einrichtung zur Verfügung zu haben. Diese Aufgabe wird gemäß der Erfindung
dadurch gelöst, daß die Siebtrommel sowie der Einlaufkasten und das Auffanggefäß für das Siebgut in einem
transportfähigen und geruch- bzw. gasdicht verschließbaren Gehäuse untergebracht ist. Damit sind beide Forderungen erfüllt. Besonders günstig ist es, wenn das Gehäuse die Außenabmessungen und Aufhängepunkte eines genormten Großmüllcontainers hat. Dann können die für den Transport solcher Container speziell hergerichteten Fahrzeuge auch zum Umsetzen der Abtrenneinrichtung eingesetzt werden, so daß sich der Umbau eines vorhandenen Fahrzeugs oder der Bau eines Spezialfahrzeugs erübrigt.

In weiterer Ausgestaltung der Erfindung ist die Siebgut-Abwurfschurre der Siebtrommel so hoch angeordnet, daß als Auffangbehälter dienende Fässer od. dgl. untergestellt werden können. Das geruchsintensive Siebgut bleibt also bis zum Abtransport in dem Gehäuse; der Transport in Fässern hat den Vorteil, diese ebenfalls dicht verschließen zu können. Um die Fässer leicht einstellen und herausheben zu können, ist das Gehäuse vorzugsweise mit einer geruchdicht und/oder gasdicht verschließbaren Tür versehen.

Da die Siebtrommel aus den vorgenannten Gründen relativ hoch im Gehäuse angeordnet werden muß, bietet es sich an, den unter der Siebtrommel und dem Einlaufkasten liegenden Raum zu nutzen. Dies kann durch Verwendung als Speicherabteil für die durch die Siebtrommel gelaufene, gereinigte Flüssigkeit geschehen. Die Flüssigkeit tritt ohne Zwischenförderung unmittelbar in das Speicherabteil ein. Der Nutzinhalt kann als Vorlage für eine Pumpe dienen, die die gereinigte Flüssigkeit seiner Wiederverwendung oder Ableitung zuführt. Dabei kann ein Schwimmerschalter den Höchst- und Niedrigstspiegel abtasten und die Pumpe entsprechend steuern und/oder einen Schieber betätigen. Ferner ist es möglich, gesundheitsschädigende oder explosive Flüssigkeiten nach der Reinigung im Behälter zu belassen und abzutransportieren.

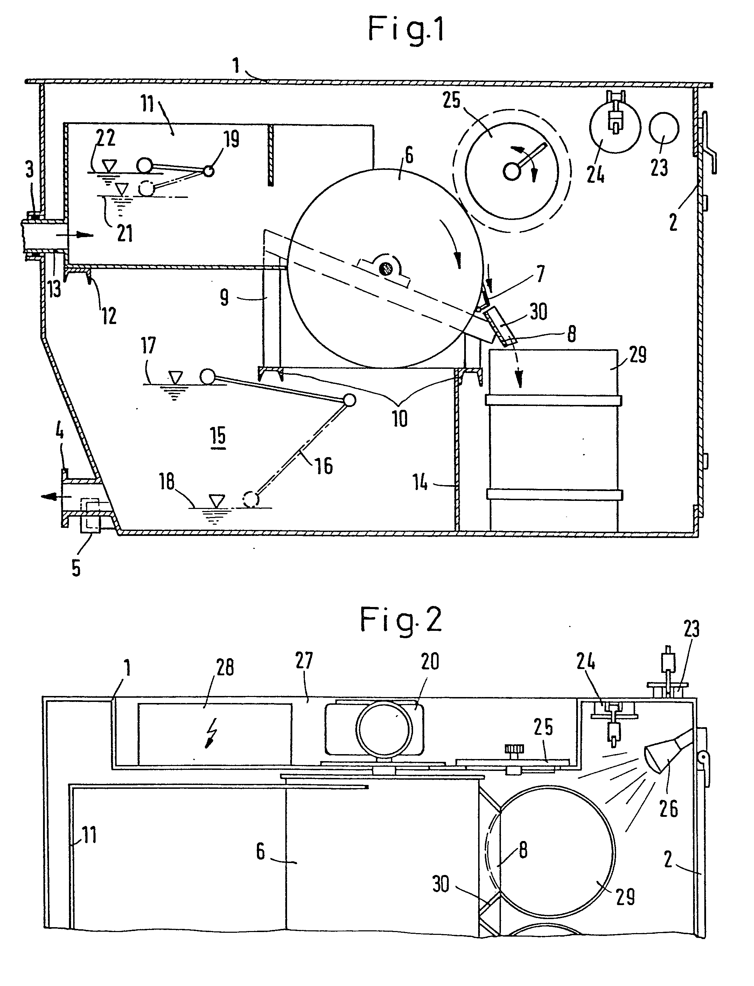

Ein Ausführungsbeispiel der Erfindung wird anhand der Zeichnung, die eine komplette Abtrenneinrichtung im vertikalen Längsschnitt (Fig. 1) und in der Draufsicht (Fig. 2) zeigt, nachfolgend näher erläutert.

Das die Außenabmessungen eines Großmüllcontainers aufweisende Gehäuse 1 ist allseits geruchdicht verschlossen. Die eine Stirnwand ist mit einer Tür 2 versehen, die ebenfalls abgedichtet ist. Auf der gegenüber liegenden Seite sind die Rohranschlüsse vorgesehen, und zwar oben der Zulaufstutzen 3 und unten ein Pumpenanschluß 4 und eine Reinigungs- bzw. Grundablaßöffnung 5.

Die Siebtrommel 6 ist mit Abstreifmesser 7 und Abwurfschurre 8 auf einem Gestell 9 montiert, das auf Traversen 10 ruht. Mit diesem Bauteil einstückig vereint ist der Einlaufkasten 11, dem eine weitere Traverse 12 zugeordnet ist. Der Einlaufkasten 11 ist zur Trommel hin stirnseitig offen. Das Zulaufrohr 13 ist unter Zwischenfügen einer Dichtung durch den Zulaufstutzen 3 geführt. Dies hat den Vorteil, daß derselbe Container für verschieden große Siebtrommeleinheiten verwendet werden kann.

Der Raum unter dieser Einheit ist durch eine Querwand 14 zu einem Speicherabteil 15 für die gereinigte Flüssigkeit gemacht. Da es oben für die im freien Fall eintretende Flüssigkeit offen sein muß, ist ein Schwimmerschalter 16 vorgesehen, der beim höchsten Stand 17 die bei 4 angeschlossene Pumpe ein- und beim tiefsten Stand 18 wieder ausschaltet.

Auch bei dem Einlaufkasten 11 muß Vorsorge gegen das Überlaufen getroffen werden. Der hierzu vorgesehene Schwimmerschalter 19 ist mit dem Getriebemotor 20 der Siebtrommel 6 in der Weise verbunden, daß bei hohem Flüssigkeitsstand 21 die höhere Drehzahl eingeschaltet und bei Höchststand 22 die Siebtrommel stillgesetzt und/oder der Zulauf gesperrt und/oder ein Alarm ausgelöst wird.

Für den Fall, daß im Gehäuseinnern ein Über- oder Unterdruck entsteht, sind eine Entlüftungs- 23 und eine Belüftungsöffnung 24 mit gewichtsbelasteten Klappen vorgesehen. Des weiteren kann ein Schauloch 25 mit Scheibenwischer und eine Innenbeleuchtung 26 installiert sein.

Um den Getriebemotor 20 beim Transport vor Beschädigungen zu schützen, sollte er, wie gezeigt, in einem Gehäuserücksprung 27 angeordnet werden. Dieser Rücksprung kann dann so groß dimensioniert werden, daß er auch den Schaltschrank 28 aufnehmen kann.

Als Auffanggefäße können handelsübliche Fässer 29 mit 200 l Inhalt verwendet werden. Bei breiten Siebtrommeln, die im wesentlichen die ganze Tiefe des Gehäuses einnehmen, müssen mehrere Fässer nebeneinander aufgestellt werden. Die Abwurfschurre 8 ist dann mit dachförmigen Leitblechen 30 versehen, die das Siebgut zu den Fässern hin lenken.

Patentansprüche

1. Einrichtung zum Abtrennen von festen Verunreinigungen aus einer Flüssigkeit, mit einer rotierenden horizontalachsigen Siebtrommel, der die zu reinigende Flüssigkeit von außen aufgegeben wird und bei der die Verunreinigungen (Siebgut) von der Außenseite der Siebtrommel abgeschält werden, dadurch g e - k e n n z e i c h n e t , daß die Siebtrommel (6) sowie der Einlaufkasten (11) und das Auffanggefäß (29) für das Siebgut in einem transportfähigen und geruch- und gasdicht verschließbaren Gehäuse (1) untergebracht ist.

2. Einrichtung nach Anspruch 1, dadurch g e - k e n n z e i c h n e t , daß das Gehäuse (1) die Außenabmessungen und Aufhängepunkte eines genormten Großmüllcontainers hat.

3. Einrichtung nach Anspruch 1 oder 2, dadurch g e k e n n z e i c h n e t , daß das Gehäuse (1) durch eine geruch- bzw. gasdicht verschließbare Tür (2) begehbar ist.

4. Einrichtung nach Anspruch 1, 2 oder 3, dadurch g e k e n n z e i c h n e t , daß der Raum unter der Siebtrommel (6) und ihrem Einlaufkasten (11) als Speicherabteil (15) für die durch die Siebtrommel gelaufene, gereinigte Flüssigkeit ausgebildet ist.

5. Einrichtung nach Anspruch 4, dadurch g e - k e n n z e i c h n e t , daß die Abwurfschurre (8) der Siebtrommel (6) so hoch angeordnet und ausgebildet ist, daß als Auffangbehälter dienende Fässer (29) od. dgl. untergestellt werden können.

6. Einrichtung nach Anspruch 4, dadurch g e k e n n - z e i c h n e t , daß das Speicherabteil (15) und/ oder der Einlaufkasten (11) mit einem Schwimmerschalter (16, 19) ausgerüstet ist.

7. Einrichtung nach Anspruch 6, dadurch g e k e n n - z e i c h n e t , daß der Schwimmerschalter (19) des Einlaufkastens (11) mit dem Antriebsmotor (20) der Siebtrommel (6) in der Weise verbunden ist, daß bei hohem Stand (21) eine höhere Antriebsdrehzahl eingeschaltet wird und bei Höchststand (22) die Siebtrommel stillgesetzt und/oder der Zulauf gesperrt und/ oder ein Alarm ausgelöst wird.

8. Einrichtung nach einem oder mehreren der vorstehenden Ansprüche, dadurch g e k e n n z e i c h - n e t , daß das Gehäuse (1) je eine durch eine gewichtsbelastete Klappe verschließbare Be- bzw. Entlüftungsöffnung (24, 23) aufweist.

# Fig.1

# Fig.2

Europäisches
Patentamt

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | B 01 D 33/10 <br> 33/38 |
| | US - A - 3 722 684 (GINO MAESTRELLI) <br> * Spalte 2, Zeilen 19-68; Spalten 3-6 * <br><br> -- | 1,3,5 | |
| | DE - C - 375 305 (FERD. A. FRANK) <br> * Seiten 1,2 * <br><br> -- | 1,6,7, 8 | |
| | DE - C - 498 590 (GEORG BAGANZ) <br> * Seiten 1-3 * <br><br> -- | 1,3,8 | **RECHERCHIERTE SACHGEBIETE (Int. Cl.³)** <br><br> B 01 D 33/10 <br> 33/08 <br> 33/38 <br> 33/36 |
| | US - A - 1 368 618 (HENRY B. FABER) <br> * Seiten 1-4 * <br><br> -- | 1,8 | |
| | DE - C - 252 498 (MASCHINENBAU & METALLTUCHFABRIK) <br> * Seiten 1,2 * <br><br> -- | 7 | |
| | DE - A - 2 743 556 (THE CARBORUNDUM CO.) <br> * Seiten 7-11 * <br><br> ---- | 4 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-04-1981 | DE PAEPE |

EPA form 1503.1  06.78